(19) Europäisches Patentamt
European Patent Office
Office européen des brevets

(11) EP 2 793 233 B1

(12) EUROPEAN PATENT SPECIFICATION

(45) Date of publication and mention of the grant of the patent:
**01.03.2017 Bulletin 2017/09**

(21) Application number: **12841204.6**

(22) Date of filing: **19.10.2012**

(51) Int Cl.:
***G21G 1/00*** (2006.01) ***B01J 20/26*** (2006.01)
***B01J 20/24*** (2006.01) ***B01J 20/34*** (2006.01)
***C08L 1/08*** (2006.01) ***C08L 5/02*** (2006.01)
***C08B 15/00*** (2006.01) ***C08B 37/02*** (2006.01)
***B01D 15/42*** (2006.01)

(86) International application number:
**PCT/JP2012/077033**

(87) International publication number:
**WO 2013/058345 (25.04.2013 Gazette 2013/17)**

# (54) Ge adsorbent for a 68Ge-68Ga generator

GE-ADSORBENS FÜR EINEN 68GE-68GA-GENERATOR

Ge destiné à un générateur de 68Ge-68Ga

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2011 JP 2011232213**

(43) Date of publication of application:
**22.10.2014 Bulletin 2014/43**

(73) Proprietor: **Nagasaki University**
**Nagasaki-Shi, Nagasaki 852-8521 (JP)**

(72) Inventors:
- **NAKAYAMA, Morio**
  **Nagasaki-shi, Nagasaki 852-8521 (JP)**
- **HARATAKE, Mamoru**
  **Nagasaki-shi, Nagasaki 852-8521 (JP)**
- **FUCHIGAMI, Takeshi**
  **Nagasaki-shi, Nagasaki 852-8521 (JP)**
- **IWATAKE, Mayumi**
  **Nagasaki-shi, Nagasaki 852-8521 (JP)**

(74) Representative: **Duckworth, Timothy John**
**J A Kemp**
**14 South Square**
**Gray's Inn**
**London WC1R 5JJ (GB)**

(56) References cited:
**WO-A1-2008/108311 JP-A- 2001 113 179**
**US-A- 6 160 110 US-A1- 2008 277 350**

- **D. R. PHILLIPS ET AL.: "APPLICATION OF SEPHADEX TO RADIOCHEMICAL SEPARATIONS", JOURNAL OF RADIOANALYTICAL AND NUCLEAR CHEMISTRY, ARTICLES, vol. 195, no. 2, 1995, pages 251-261, XP002734496,**
- **MAMORU HARATAKE ET AL.: '68Ge-68Ga Generator Seizo no Tameno Shinki Glucamine-gata Jushi no Kaihatsu' THE JAPAN SOCIETY FOR ANALYTICAL CHEMISTRY DAI 57 NENKAI KOEN YOSHISHU 27 August 2008, page 303, XP008173413**
- **MORIO NAKAYAMA ET AL.: 'Rinshoyo PET no Tameno 68Ge/68Ga Generator System no Kaihatsu - Sanseiki o Donyu shita N-Methylglucamine-gata Jushi no Bunri Tokusei no Kento' THE JAPAN SOCIETY FOR ANALYTICAL CHEMISTRY DAI 60 NENKAI KOEN YOSHISHU 31 August 2011, page 340, XP008173381**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to the use of a Ge adsorbent in a $^{68}Ge$-$^{68}Ga$ generator and to a $^{68}Ge$-$^{68}Ga$ generator comprising the adsorbent. The $^{68}Ge$-$^{68}Ga$ generator here means an apparatus that takes out $^{68}Ga$ generated from $^{68}Ge$.

Background Art

Positron Emission Tomography (PET) using physiologically active substances and the like labeled with a positron emission nuclide (pharmaceutical for image diagnosis) affords functional images of organs and tissues at a molecular level. As a pharmaceutical for image diagnosis by PET, deoxyglucose labeled with $^{18}F$ ($^{18}F$-FDG) is mostly used as the situation stands.

Since positron emission nuclides such as $^{18}F$ and the like have a short life, to utilize same, a PET imaging apparatus as well as a large facility containing a cyclotron need to be constructed, which has been an obstacle for the availability of PET. While PET can be utilized in a delivery facility supplied with $^{18}F$-FDG from other large facility installed with a cyclotron, when $^{18}F$-FDG is supplied to any place in the country, the delivery cost thereof becomes problematically high.

To utilize PET more than before, a method of obtaining a $\beta^+$ emission nuclide without using a cyclotron is necessary. From such viewpoint, the present inventors took note of $^{68}Ge$-$^{68}Ga$ generators and have been engaged in the development of Ge adsorbents. Here, the $^{68}Ge$-$^{68}Ga$ generator is an apparatus that takes out only $^{68}Ga$ generated from $^{68}Ge$ adsorbed to an adsorbent by utilizing the radioactive equilibrium between long-lived $^{68}Ge$ (parent nuclide) having a half-life of 271 days and short-lived $^{68}Ga$ (daughter nuclide) having a half-life of 68 minutes.

Ge adsorbents used for $^{68}Ge$-$^{68}Ga$ generators are required to adsorb $^{68}Ge$ alone and be able to elute $^{68}Ga$ generated from $^{68}Ge$, namely, high $^{68}Ge$ adsorption selectivity. Conventional adsorbents for $^{68}Ge$-$^{68}Ga$ generators such as those described in non-patent documents 1 and 2 are inorganic adsorbents associated with a problem of low $^{68}Ge$ adsorption selectivity.

In view of the above, the present inventors proposed an organic adsorbent having high $^{68}Ge$ adsorption selectivity in patent document 1. To be specific, patent document 1 proposes a polymer composed of glycidyl methacrylate-ethylene glycol dimethacrylate copolymer and N-methylglucamine introduced thereinto and the like as Ge adsorbents.

Patent document 2 describes use of a chelate-forming fiber, wherein an amino group derived from diethanolamine, monoethanolamine and the like is introduced into a molecule of a plant fiber such as cotton and the like, for removal of germanium from an aqueous solution. However, patent document 2 does not describe at all a group derived from N-methylglucamine and the like ("glucamine group" in the present invention). In addition, patent document 2 does not describe a $^{68}Ge$-$^{68}Ga$ generator at all.

Moreover, non-patent document 3 describes use of Sephadex (crosslinked dextran) for recovery of $^{68}Ge$ from molybdenum irradiated with proton. However, non-patent document 3 only describes use of Sephadex itself, namely, an unmodified crosslinked dextran, and does not describe at all use of crosslinked dextran introduced with a glucamine group.

[Document List]

[patent documents]

patent document 1: WO 2008/108311
patent document 2: JP-A-2001-113179

US 6,160,110 A describes a water-soluble or water-dispersible amino acid copolymer having pendent polysaccharide moieties.

[non-patent documents]

non-patent document 1: K. V. Malyshev and V. V. Smirnov, "A GENERATOR OF GALLIUM-68 BASED ON ZIRCONIUM HYDROXIDE", Radiokhimiya, Vol. 17, No. 1, pp. 137-140, (1975)
non-patent document 2: Shizuko Ambe, "68Ge-68Ga Generator with Alpha-Ferric Oxide Support", Appl Radiat. Isot. Vol. 39, No. 1, pp. 49-51, 1988
non-patent document 3: D. R. Phillips, et al., "APPLICATION OF SEPHADEX TO RADIOCHEMICAL SEPARATIONS", Journal of Radioanalytical and Nuclear Chemistry, Articles, Vol. 195, No. 2 (1995) 251-261

## SUMMARY OF THE INVENTION

### Problems to be Solved by the Invention

As the mentioned above, the present inventors propose in patent document 1 a polymer wherein N-methylglucamine is introduced into a glycidyl methacrylate-ethylene glycol dimethacrylate copolymer and the like as Ge adsorbents. For medical application of a $^{68}$Ge-$^{68}$Ga generator, however, a pharmaceutical for image diagnosis that shows a high-specific activity with a small volume (in other words, a pharmaceutical for image diagnosis containing a positron emission nuclide at a high concentration) is necessary. Therefore, it is requested to increase a $^{68}$Ga elution percentage of a Ge adsorbent for a $^{68}$Ge-$^{68}$Ga generator so that it can sufficiently elute $^{68}$Ga even with a small amount of an eluent solution.
The present invention has been made taking note of the situation mentioned above, and an object thereof is to use a Ge adsorbent in a $^{68}$Ge-$^{68}$Ga generator, which shows high $^{68}$Ge adsorption selectivity and improved $^{68}$Ga elution percentage than the prior art patent such as document 1 and the like. Means of Solving the Problems
The present inventors have conducted intensive studies in an attempt to achieve the aforementioned object and found that a polysaccharide polymer, wherein a glucamine group derived from N-methylglucamine and the like is introduced, shows a superior $^{68}$Ga elution percentage. The present invention based on this finding is as described below.
[1] Use of a polysaccharide polymer having a glucamine group represented by the formula (1) or the formula (2):

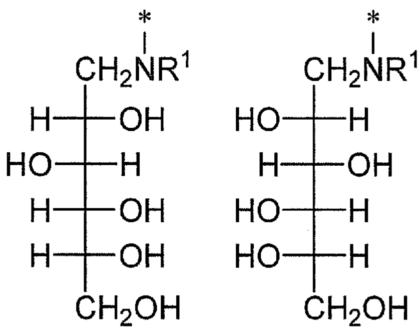

(1) (2)

wherein $R^1$ is a hydrogen atom or an alkyl group, and * is a bonding position, as a Ge adsorbent in a $^{68}$Ge-$^{68}$Ga generator.
[2] The use according to [1], wherein the polysaccharide polymer is a crosslinked dextran or a crosslinked cellulose.
[3] The use according to [1], wherein the polysaccharide polymer is a crosslinked dextran.
[4] The use according to any one of [1] to [3], wherein $R^1$ is a methyl group.
[5] A $^{68}$Ge-$^{68}$Ga generator comprising a polysaccharide polymer having a glucamine group represented by the formula (1) or the formula (2):

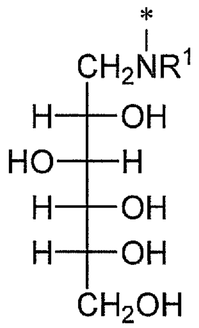 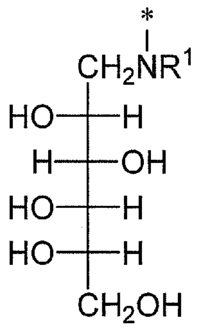

(1) (2)

wherein $R^1$ is a hydrogen atom or an alkyl group, and * is a bonding position.

[6] The $^{68}Ge$-$^{68}Ga$ generator according to [5], wherein the polysaccharide polymer is a crosslinked dextran or a crosslinked cellulose.

[7] The $^{68}Ge$-$^{68}Ga$ generator according to [5], wherein the polysaccharide polymer is a crosslinked dextran.

[8] The $^{68}Ge$-$^{68}Ga$ generator according to any one of [5] to [7], wherein $R^1$ is a methyl group.

[9] A production method of a $^{68}Ga$-containing liquid, which uses a $^{68}Ge$-$^{68}Ga$ generator, comprising

adsorbing $^{68}Ge$ to a polysaccharide polymer having a glucamine group represented by the formula (1) or the formula (2) :

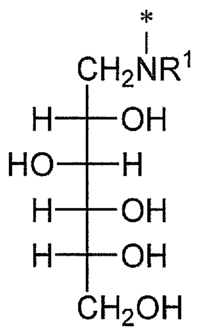 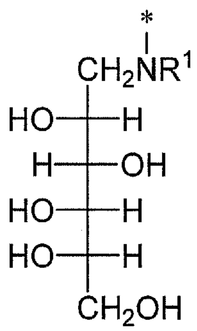

(1) (2)

wherein $R^1$ is a hydrogen atom or an alkyl group, and * is a bonding position, and
flowing an eluent solution through the polysaccharide polymer to elute $^{68}Ga$ generated from $^{68}Ge$ in the eluent solution.

[10] The method according to [9], wherein the polysaccharide polymer is a crosslinked dextran or a crosslinked cellulose.

[11] The method according to [9], wherein the polysaccharide polymer is a crosslinked dextran.

[12] The method according to any one of [9] to [11], wherein $R^1$ is a methyl group.

[13] The method according to any one of [9] to [12], wherein the eluent solution is an aqueous weak acid salt solution.

The Ge adsorbent for a $^{68}Ge$-$^{68}Ga$ generator used in the present invention shows a superior $^{68}Ga$ elution percentage.

Brief Description of the Drawings

Fig. 1 is a graph showing the relationship between the time of contact by shaking of an aqueous $^{68}Ge$ solution and the $^{68}Ge$ adsorption percentage of the adsorbents (Sepha(10)-MG to Sepha(75)-MG) measured in Example 1 of the present invention. Description of Embodiments

One of the characteristics of the Ge adsorbent for a $^{68}Ge$-$^{68}Ga$ generator used in the present invention is the presence of a glucamine group. Here, the glucamine group means a group induced from glucamine ($R^1$: hydrogen atom)

or a group induced from N-alkylglucamine ($R^1$: alkyl group), which is represented by the above-mentioned formula (1) or (2). Both glucamine and N-alkylglucamine may be in a D form or an L form. A glucamine group represented by the formula (1) is induced from glucamine or N-alkylglucamine in a D form, and a glucamine group represented by the formula (2) is induced from glucamine or N-alkylglucamine in an L form. The Ge adsorbent used in the present invention may have only one kind of glucamine group, and optionally has two or more kinds of glucamine group (e.g., glucamine group represented by the formula (1) and glucamine group represented by the formula (2)).

As described in patent document 1, glucamine group strongly adsorbs Ge by dehydrative condensation with germanic acid ($Ge(OH)_4$). However, such dehydrating condensation does not occur in Ga, and strong adsorption is not considered to occur. With such assumed mechanism, the Ge adsorbent used in the present invention having a glucamine group is considered to show superior $^{68}Ge$ adsorption selectivity.

While the alkyl group for $R^1$ may be linear or branched chain, it is preferably linear for the formation of the glucamine group, since the steric hindrance is small. The number of carbon of the alkyl group for $R^1$ is preferably 1 - 8, more preferably 1 - 4. Examples of the alkyl group for $R^1$ include a methyl group, an ethyl group, a butyl group and the like, with preference given to a methyl group.

One of the characteristics of the Ge adsorbent used in the present invention for a $^{68}Ge$-$^{68}Ga$ generator is that it is a polysaccharide polymer. Examples of the polysaccharide polymer include dextran, cellulose, agarose, pullulan and the like. The polysaccharide polymer may be modified by crosslinking and the like. Since unmodified dextran and pullulan are water-soluble and cannot be used as Ge adsorbents, they need to be made insoluble in water by crosslinking and the like.

Polysaccharide polymers are commercially available. Examples of the commercially available dextran-based polymer include Sephadex, Sephacryl manufactured by GE Healthcare Japan, and the like. Examples of the commercially available cellulose-based polymer include Cellufine Folmyl, Cellufine GH25 manufactured by Chisso Corporation, and the like. Examples of the commercially available agarose-based polymer include Sepharose 6B manufactured by Sigma-Aldrich, and the like. A polysaccharide polymer produced by a known method can also be used.

As the polysaccharide polymer, crosslinked dextran (e.g., Sephadex manufactured by GE Healthcare Japan, etc.) or crosslinked cellulose (e.g., Cellufine Folmyl, Cellufine GH25 manufactured by Chisso Corporation, etc.) is preferable, and crosslinked dextran is more preferable. The degree of crosslinking of the crosslinked polysaccharide polymer (e.g., crosslinked dextran, crosslinked cellulose) can be specified by the swelling constant (unit: mL/g) (i.e., volume (mL) of crosslinked polysaccharide polymer after swelling, which is obtained by leaving a dried crosslinked polysaccharide polymer (1 g) in 0.01M phosphate buffer (pH 7) at room temperature for 24 hr). The swelling constant is preferably 1 - 20 (mL/g), more preferably 2 - 8 (mL/g), still more preferably 2.5 - 6 (mL/g), from the aspects of the amount of $^{68}Ge$ adsorption and physical strength of the adsorbent.

When the N atom in the adsorbent is derived solely from glucamine group, the molar quantity of the glucamine group is the same as the molar quantity of N atom. Therefore, the amount of the glucamine group in the adsorbent can be specified by the amount of N atom contained in the glucamine group. The higher the content of the glucamine group (N atom content) is, the more $^{68}Ge$ can be adsorbed. To introduce a large amount of the glucamine group into the adsorbent, however, the degree of crosslinking of the polysaccharide polymer needs to be reduced. When the degree of crosslinking is reduced too much, the physical strength decreases. Therefore, for the balance of the amount of $^{68}Ge$ adsorption and the physical strength, the content of N atom in the adsorbent (i.e., molar quantity of N atom in 1 g of dried adsorbent, unit: mmol/g) is preferably 0.1 - 1.0 mmol/g, more preferably 0.2 - 0.8 mmol/g. The content of N atom in the adsorbent can be measured by elemental analysis and the like. Elemental analysis can be performed by, for example, an organic micro element analyzer, Perkin Elmer 2400 II.

The production method of the polysaccharide polymer having a glucamine group, namely, a method of introducing glucamine or N-alkylglucamine into a polysaccharide polymer, is not particularly limited, and a known organic synthesis reactions and reagents can be used therefor. In the production method of a polysaccharide polymer having a glucamine group, glucamine in a D form and N-alkylglucamine are preferably used, and N-methyl-D-glucamine is more preferably used, from the aspects of easy availability and the like.

Since polysaccharide polymers generally have a hydroxy group, for example, glucamine or N-alkylglucamine can be introduced using the hydroxy group. For example, the adsorbent used in the present invention can be produced by

(1) first reacting a compound having a functional group reactive with a hydroxy group and an epoxy group (e.g., epichlorohydrin) with a polysaccharide polymer to produce a polysaccharide polymer having an epoxy group, and
(2) then reacting the obtained polysaccharide polymer having an epoxy group with glucamine or N-alkylglucamine.

The reaction of the above-mentioned (1) (when epichlorohydrin is used, condensation reaction that eliminates HCl) and the reaction of epoxy group and amino group of the above-mentioned (2) are well known in the field of organic synthesis, and those of ordinary skill in the art can perform them appropriately by using well-known conditions. In addition, the amount of glucamine or N-alkylglucamine to be used in the above-mentioned (2) can be appropriately adjusted to

meet the preferable content of N atom in the aforementioned adsorbent.

The present invention also provides a $^{68}Ge$-$^{68}Ga$ generator containing a polysaccharide polymer having the aforementioned glucamine group as an adsorbent. The $^{68}Ge$-$^{68}Ga$ generator is an apparatus for taking out $^{68}Ga$ alone by utilizing the principle of column chromatography, by eluting $^{68}Ga$ generated from $^{68}Ge$ adsorbed to an adsorbent (stationary phase) with an eluent solution. Therefore, the $^{68}Ge$-$^{68}Ga$ generator includes a Ge adsorbent and a column for filling same. The size and length of the-column can be appropriately determined in consideration of the $^{68}Ga$ elution percentage and the like.

The $^{68}Ge$-$^{68}Ga$ generator of the present invention may be provided with an apparatus well known in the field. Examples of the well-known apparatus include a pump for supplying an eluent solution in a column and the like.

The present invention also provides a production method of a $^{68}Ga$-containing liquid, which uses a $^{68}Ge$-$^{68}Ga$ generator containing, as an adsorbent, the aforementioned polysaccharide polymer having a glucamine group. The production method of the present invention is characterized by adsorbing $^{68}Ge$ onto the aforementioned adsorbent, flowing an eluent solution through the adsorbent, and eluting $^{68}Ga$ generated from $^{68}Ge$ in the eluent solution.

As the eluent solution, an aqueous weak acid salt solution is preferable. Examples of the aqueous weak acid salt solution include aqueous solutions of citrate, phosphate, malate, tartrate and the like. Of these, aqueous citrate solution and aqueous phosphate solution are preferable, aqueous sodium citrate solution, aqueous sodium phosphate solution, phosphate buffer and the like are more preferable, and aqueous trisodium citrate solution and aqueous disodium hydrogen phosphate solution are still more preferable. The concentration of the weak acid salt in the aqueous solution is preferably about 0.01 - 0.6 mol/L, more preferably about 0.05 - 0.2 mol/L. The pH of the aqueous weak acid salt solution is preferably about 7 - 10, more preferably about 8 - 9.

Using bioactive polypeptide, an antibody fragment and the like introduced with a ligand for $^{68}Ga$ as an eluent in the eluent solution, a $^{68}Ga$-containing liquid obtained by the production method of the present invention can be used as a pharmaceutical for image diagnosis (direct method). In addition, a pharmaceutical for image diagnosis may be produced by the production method of the present invention, by first producing a $^{68}Ga$-containing liquid, and then exchanging the ligand (e.g., citric acid) for a complex in the $^{68}Ga$-containing liquid (e.g., complex of citric acid and $^{68}Ga$) (indirect method).

## Examples

The present invention is more specifically explained in the following by referring to Examples, which do not limit the present invention. The present invention can be practiced with appropriate modifications as long as they are compatible with the technical scope of the present invention.

### Example 1

(I) Production of crosslinked dextran having glucamine group

Sephadex G10, Sephadex G15, Sephadex G25 (Fine), Sephadex G50 (Fine) or Sephadex G75 (Fine) (all crosslinked dextran manufactured by GE Healthcare Japan) and epichlorohydrin were stirred in 1M aqueous NaOH solution at 25°C for 24 hr, whereby an epoxy group was introduced into the crosslinked dextran. The obtained crosslinked dextran having an epoxy group and N-D-methylglucamine ("N-methylglucamine" manufactured by Nacalai Tesque) were stood in sodium carbonate buffer for 6 days to produced crosslinked dextran having a glucamine group. The obtained crosslinked dextran having a glucamine group was suspended in 0.5 M sodium carbonate buffer (pH 10) and stood for 6 days. Thereafter, the crosslinked dextran having a glucamine group was sufficiently washed with water, and preserved under wet condition in 0.01M phosphate buffer (pH 7). The resulting crosslinked dextran having a glucamine group was used for the production of a generator. The crosslinked dextran having a glucamine group was freeze-dried, and the obtained dried product was preserved in a desiccator.

(II) Consideration of the content of N atom

The content of N atom in the adsorbent obtained in the above-mentioned (I) (i.e., crosslinked dextran having a glucamine group) (namely, molar quantity of N atom in 1 g of dried adsorbent, unit: mmol/g) was analyzed by an organic micro element analyzer, Perkin Elmer 2400 II. The results are shown in Table 1. In Table 1, the kind and swelling constant of the starting material crosslinked dextran used in the above-mentioned (I) are also described.

(III) Consideration of Ge adsorption amount

The Ge adsorption amount (molar quantity of Ge adsorbed by 1 g of dried adsorbent, unit: mmol/g) of the

adsorbent obtained in the above-mentioned (I) was measured by the following operation. The results are shown in Table 1.

(1) An adsorbent (50 mg) was placed in a 50 mL Erlenmeyer flask.
(2) Germanium dioxide was dissolved in an appropriate amount of 0.1M aqueous sodium hydroxide solution, neutralized with 0.5M hydrochloric acid, and measured up to 200 mL in total with 0.01M phosphate buffer (pH 7) to give 5 mM aqueous Ge solution.
(3) The aqueous solution (20 mL) obtained in the above-mentioned (2) was added to the Erlenmeyer flask in the above-mentioned (1).
(4) The Erlenmeyer flask in the above-mentioned (3) was shaken (120 rpm) at 25°C overnight to allow adsorption of Ge to the adsorbent.
(5) The supernatant was collected from the Erlenmeyer flask after shaking, and appropriately diluted to fall within the range of a given analytical curve.
(6) The Ge adsorption amount of the adsorbent was calculated by phenylfluorone absorption spectrophotometry.

Table 1

| adsorbent (crosslinked dextran having glucamine group) | starting material (crosslinked dextran) | | N atom content (mmol/g) | Ge adsorption amount (mmol/g) |
|---|---|---|---|---|
| | kind | swelling constant (ml/g) | | |
| Sepha(10)-MG | Sephadex G10 | 2 - 3 | 0.23 | 0.21 |
| Sepha(15)-MG | Sephadex G15 | 2.5 - 3.5 | 0.37 | 0.25 |
| Sepha(25)-MG | Sephadex G25 (Fine) | 4 - 6 | 0.63 | 0.33 |
| Sepha(50)-MG | Sephadex G50 (Fine) | 9 - 11 | 0.72 | 0.46 |
| Sepha(75)-MG | Sephadex G75 (Fine) | 12 - 15 | 0.73 | 0.61 |

As shown in Table 1, Sepha(10)-MG to Sepha(75)-MG, which are the adsorbents of the present invention all showed sufficient Ge adsorption amounts.

(IV)) Consideration of $^{68}$Ge adsorption rate

The $^{68}$Ge adsorption rate ($^{68}$Ge adsorption percentage for the time of contact by shaking of aqueous $^{68}$Ge solution) of the adsorbent obtained in the above-mentioned (I) was measured by the following operation. The results are shown in Fig. 1.

(1) An adsorbent (10 mg) was placed in a 10 mL glass vial.

(2) 0.01M Phosphate buffer (pH 7) (1 mL) was added to the glass vial in the above-mentioned (1) to allow for infiltration of the adsorbent overnight.

(3) 0.01M Phosphate buffer (pH 7) (1 mL) containing 1 kBq $^{68}$Ge was placed in the glass vial in the above-mentioned (2) to allow of contact by shaking.

(4) The supernatant liquid (1 mL) was taken from the glass vial in the above-mentioned (3) after contact by shaking at a suitable timing, left standing overnight and the radioactivity of the residual $^{68}$Ge was measured to obtain $^{68}$Ge adsorption percentage.

$$^{68}Ge \text{ adsorption percentage } (\%) = 100 \times \{1 - [\text{radioactivity (cpm) of } ^{68}Ge \text{ in supernatant liquid after contact by shaking} / \text{radioactivity (cpm) of } ^{68}Ge \text{ added}]\}$$

In the above-mentioned operation, the radioactivity was measured using Aloka g counter ARC-380.

As shown in Fig. 1, Sepha(10)-MG to Sepha(75)-MG, which are the adsorbents of the present invention, adsorbed almost 100% of $^{68}Ge$ in 20 min after the start of the adsorption operation. Particularly, Sepha(50)-MG and Sepha(75)-MG adsorbed nearly 100% of $^{68}Ge$ immediately after the start of the adsorption operation. The results clarify that the adsorbent of the present invention shows a high $^{68}Ge$ adsorption rate.

(V) Consideration of $^{68}Ga$ elution percentage (column method)

The $^{68}Ga$ elution percentage of Sepha(25)-MG obtained in the above-mentioned (I) was measured by the following operation.

As comparison, the $^{68}Ga$ elution percentage of PGMA-EG-MG50 (150) described in patent document 1 was similarly measured. PGMA-EG-MG50(150) was produced by the method described in patent document 1. To be specific,

(I) first, a copolymer of glycidyl methacrylate and ethylene glycol dimethacrylate (PGMA-EG) was produced from glycidyl methacrylate (GMA) (25 mL), ethylene glycol dimethacrylate (EG) (25 mL) and methyl isobutyl ketone (MIBK) (75 mL),

(II) then, N-D-methylglucamine (5 mmol) was reacted with the copolymer (1 g) to produce PGMA-EG-MG50(150). Detailed production conditions are as described in patent document 1.

(apparatus)

An apparatus was configured wherein an adsorbent (i.e., Sepha(25)-MG or PGMA-EG-MG50(150)) was swollen with 0.01M phosphate buffer (pH 7.0) overnight and filled in a Teflon (registered trade mark) column tube (inner diameter 8 mm x length 35 mm) to the height of 20 mm, and a sample was recovered via an eluent solution (aqueous trisodium citrate solution) → pump → column.

($^{68}Ge$ adsorption)

(1) A $^{68}GeCl_4$ undiluted solution was appropriately diluted with 0.01M phosphate buffer (pH 7) and added to a column filled with an adsorbent.

(2) 0.01M Phosphate buffer (pH 7) (10 mL) was flown at a flow rate of 0.5 mL/min to wash the column.

(3) The outflow fluid of the above-mentioned (2) was recovered, and the radioactivity thereof was measured 2 days later.

($^{68}Ga$ elution)

(4) An eluent solution was flown in the same manner as in $^{68}Ge$ adsorption at a flow rate of 0.5 mL/min through the column after standing for 2 days.

(5) The radioactivity (cpm) of the $^{68}Ga$ in the eluent solution each taken by 1 mL (2 min) was immediately measured. Here, the radioactivity measured in the above-mentioned (3) was subtracted from the radioactivity of the solution added to the column in the above-mentioned (1), and the difference was taken as the radioactivity of $^{68}Ga$ supported in the column. The $^{68}Ga$ elution percentage was calculated by the following formula from the radioactivity measured in (5). The radioactivity of $^{68}Ga$ in the eluent solution was attenuation-compensated at the time point when the elution was completed.

$^{68}$Ge elution percentage (%)=100×[radioactivity (cpm) of $^{68}$Ge in eluent solution/radioactivity (cpm) of $^{68}$Ga supported in column]

(6) The sample of the above-mentioned (5) was left standing for one day, and the radioactivity thereof was measured, whereby an outflow of $^{68}$Ge into the eluent solution was confirmed when an eluent solution was flown.

In the above-mentioned operation, the radioactivity was measured using Aloka g counter ARC-380.

The $^{68}$Ga elution percentage of Sepha(25)-MG of the present invention was about 90% for the first fraction (1 mL). On the other hand, the $^{68}$Ga elution percentage of PGMA-EG-MG50(150) described in patent document 1 was about 35% for the first fraction (1 mL), and was about 55% for the total (2 mL) of the first and second fractions. Therefrom it is clear that the $^{68}$Ga elution percentage is drastically improved by changing the polymer introduced with a glucamine group from a conventional glycidyl methacrylate-ethylene glycol dimethacrylate copolymer to a polysaccharide polymer (crosslinked dextran). Using a Ge adsorbent for a $^{68}$Ge-$^{68}$Ga generator, which is superior in the $^{68}$Ga elution percentage, $^{68}$ Ga can be sufficiently eluted with a small amount of an eluent solution, and an eluent solution containing $^{68}$Ga at a high concentration can be obtained. An eluent solution containing $^{68}$Ga at a high concentration is useful as a pharmaceutical for image diagnosis showing highly-specific activity with a small volume, or a starting material thereof.

Example 2

(I) Production of crosslinked cellulose having glucamine group

Cellufine GH25 (crosslinked cellulose manufactured by Chisso Corporation) and epichlorohydrin were stirred in 1M sodium hydroxide at 25°C for 24 hr, whereby an epoxy group was introduced into the crosslinked cellulose. The obtained crosslinked cellulose having an epoxy group and N-D-methylglucamine ("N-methylglucamine" manufactured by Nacalai Tesque) were stood in sodium carbonate buffer for 6 days to produced crosslinked cellulose having a glucamine group. The obtained crosslinked having a glucamine group was suspended in 0.5 M sodium carbonate buffer (pH 10) and stood for 6 days. Thereafter, the crosslinked cellulose having a glucamine group was sufficiently washed with water, and preserved under wet condition in 0.01M phosphate buffer (pH 7). The resulting crosslinked cellulose having a glucamine group was used for the production of a generator. The crosslinked cellulose having a glucamine group was freeze-dried, and the obtained dried product was preserved in a desiccator.

The swelling constant of the obtained crosslinked cellulose having a glucamine group was 4 mL/g.

(II) Consideration of N atom content

The content of N atom in crosslinked cellulose having a glucamine group, which was measured in the same manner as in Example 1 (II) (namely, molar quantity of N atom in 1 g of dried adsorbent) was 0.66 mmol/g.

(III) Consideration of Ge adsorption amount

The Ge adsorption amount of crosslinked cellulose having a glucamine group, which was measured in the same manner as in Example 1 (III), was 0.6 mmol/g, and this adsorbent also showed a sufficient Ge adsorption amount.

(IV)) Consideration of $^{68}$Ga elution percentage and $^{68}$Ge adsorption rate

The $^{68}$Ga elution percentage of crosslinked cellulose having a glucamine group, which was measured in the same manner as in Example 1 (V), was about 55% for the first fraction (1 mL), and about 90% for the total (2 mL) of the first and second fractions.

In addition, when a $^{68}GeCl_4$ solution was flown through an adsorbent column for measuring the $^{68}$Ga elution percentage at a flow rate of 1 mL/min, almost 100% of $^{68}$Ge was adsorbed to the adsorbent of Example 2. It is clear from the results that the adsorbent of Example 2 also has a practically sufficient adsorption rate.

Industrial Applicability

The Ge adsorbent of the present invention for a $^{68}$Ge-$^{68}$Ga generator shows a $^{68}$Ga elution percentage superior to that of conventional adsorbents, and is useful for the production of a pharmaceutical for image diagnosis or a starting

material thereof.

This application is based on a patent application No. 2011-232213 filed in Japan.

## Claims

1. Use of a polysaccharide polymer having a glucamine group represented by the formula (1) or the formula (2):

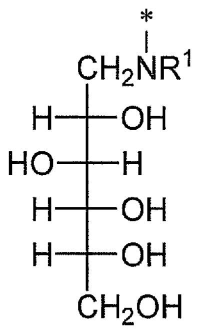

(1)

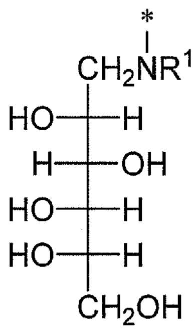

(2)

wherein $R^1$ is a hydrogen atom or an alkyl group, and * is a bonding position, as a Ge adsorbent in a $^{68}Ge$-$^{68}Ga$ generator.

2. The use according to claim 1, wherein the polysaccharide polymer is a crosslinked dextran or a crosslinked cellulose.

3. The use according to claim 1, wherein the polysaccharide polymer is a crosslinked dextran.

4. The use according to any one of claims 1 to 3, wherein $R^1$ is a methyl group.

5. A $^{68}Ge$-$^{68}Ga$ generator comprising a polysaccharide polymer having a glucamine group represented by the formula (1) or the formula (2):

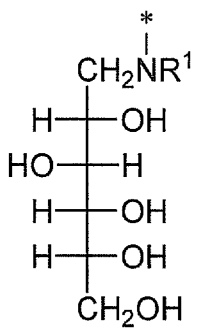

(1)

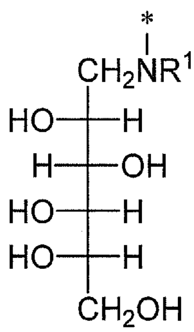

(2)

wherein $R^1$ is a hydrogen atom or an alkyl group, and * is a bonding position.

6. The $^{68}Ge$-$^{68}Ga$ generator according to claim 5, wherein the polysaccharide polymer is a crosslinked dextran or a crosslinked cellulose.

7. The $^{68}Ge$-$^{68}Ga$ generator according to claim 5, wherein the polysaccharide polymer is a crosslinked dextran.

8. The $^{68}Ge$-$^{68}Ga$ generator according to any one of claims 5 to 7, wherein $R^1$ is a methyl group.

9. A production method of a $^{68}Ga$-containing liquid, which uses a $^{68}Ge$-$^{68}Ga$ generator, comprising

adsorbing $^{68}Ge$ to a polysaccharide polymer having a glucamine group represented by the formula (1) or the formula (2) :

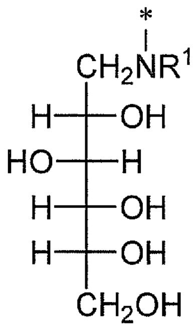

(1)

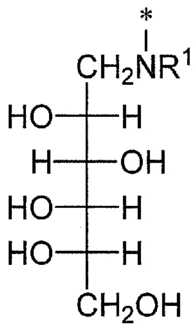

(2)

wherein $R^1$ is a hydrogen atom or an alkyl group, and * is a bonding position, and
flowing an eluent solution through the polysaccharide polymer to elute $^{68}Ga$ generated from $^{68}Ge$ in the eluent solution.

**10.** The method according to claim 9, wherein the polysaccharide polymer is a crosslinked dextran or a crosslinked cellulose.

**11.** The method according to claim 9, wherein the polysaccharide polymer is a crosslinked dextran.

**12.** The method according to any one of claims 9 to 11, wherein $R^1$ is a methyl group.

**13.** The method according to any one of claims 9 to 12, wherein the eluent solution is an aqueous weak acid salt solution.

**Patentansprüche**

**1.** Verwendung eines Polysaccharidpolymers mit einer Glucamin-Gruppe, dargestellt durch die Formel (1) oder die Formel (2):

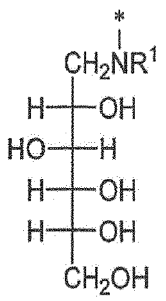

(1)

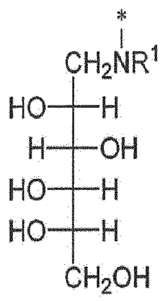

(2) ,

worin $R^1$ ein Wasserstoffatom oder eine Alkylgruppe und * eine Bindeposition ist, als ein Ge-Adsorbens in einem $^{68}Ge$-$^{68}Ga$-Generator.

**2.** Verwendung nach Anspruch 1, wobei das Polysaccharidpolymer ein vernetztes Dextran oder eine vernetzte Cellulose ist.

**3.** Verwendung nach Anspruch 1, wobei das Polysaccharidpolymer ein vernetztes Dextran ist.

**4.** Verwendung nach irgendeinem der Ansprüche 1 bis 3, wobei $R^1$ eine Methylgruppe ist.

**5.** $^{68}Ge$-$^{68}Ga$-Generator, umfassend ein Polysaccharidpolymer mit einer Glucamin-Gruppe, dargestellt durch die Formel (1) oder die Formel (2):

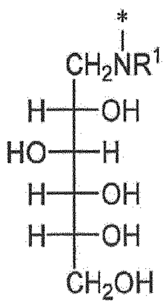

(1)

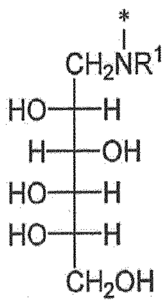

(2)

,

worin $R^1$ ein Wasserstoffatom oder eine Alkylgruppe und * eine Bindeposition ist.

**6.** $^{68}Ge$-$^{68}Ga$-Generator nach Anspruch 5, wobei das Polysaccharidpolymer ein vernetztes Dextran oder eine vernetzte Cellulose ist.

**7.** $^{68}Ge$-$^{68}Ga$-Generator nach Anspruch 5, wobei das Polysaccharidpolymer ein vernetztes Dextran ist.

**8.** $^{68}Ge$-$^{68}Ga$-Generator nach irgendeinem der Ansprüche 5 bis 7, wobei $R^1$ eine Methylgruppe ist.

**9.** Verfahren zur Herstellung einer $^{68}Ga$ enthaltenden Flüssigkeit, welche einen $^{68}Ge$-$^{68}Ga$-Generator verwendet, umfassend

Adsorbieren von $^{68}Ge$ an einem Polysaccharidpolymer mit einer Glucamin-Gruppe, dargestellt durch die Formel (1) oder die Formel (2):

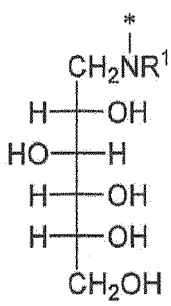

(1)

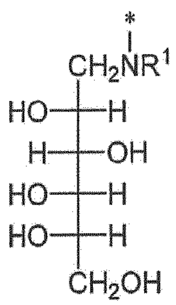

(2)

,

worin $R^1$ ein Wasserstoffatom oder eine Alkylgruppe und * eine Bindeposition ist, und
Durchströmen einer Elutionslösung durch das Polysaccharidpolymer, um $^{68}Ga$ zu eluieren, das aus $^{68}Ge$ in der Elutionslösung erzeugt wurde.

**10.** Verfahren nach Anspruch 9, wobei das Polysaccharidpolymer ein vernetztes Dextran oder eine vernetzte Cellulose ist.

**11.** Verfahren nach Anspruch 9, wobei das Polysaccharidpolymer ein vernetztes Dextran ist.

**12.** Verfahren nach irgendeinem der Ansprüche 9 bis 11, wobei $R^1$ eine Methylgruppe ist.

**13.** Verfahren nach irgendeinem der Ansprüche 9 bis 12, wobei die Elutionslösung eine wässrige schwach saure Salzlösung ist.

## Revendications

1. Utilisation d'un polymère polysaccharide comportant un groupe glucamine représenté par la formule (1) ou par la formule (2) :

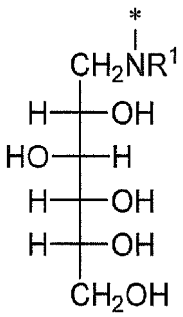

(1)

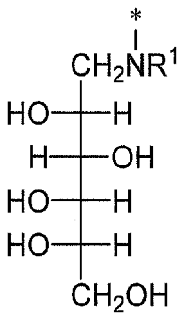

(2)

dans lesquelles $R^1$ est un atome d'hydrogène ou un groupe alkyle, et * est une position de liaison, en tant qu'adsorbant de Ge dans un générateur de $^{68}Ge$-$^{68}Ga$.

2. Utilisation selon la revendication 1, dans laquelle le polymère polysaccharide est un dextrane réticulé ou une cellulose réticulée.

3. Utilisation selon la revendication 1, dans laquelle le polymère polysaccharide est un dextrane réticulé.

4. Utilisation selon l'une quelconque des revendications 1 à 3, dans laquelle $R^1$ est un groupe méthyle.

5. Générateur de $^{68}Ge$-$^{68}Ga$ comprenant un polymère polysaccharide comportant un groupe glucamine représenté par la formule (1) ou par la formule (2) :

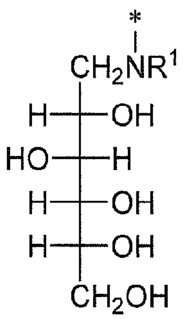

(1)

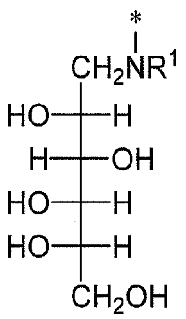

(2)

dans lesquelles $R^1$ est un atome d'hydrogène ou un groupe alkyle, et * est une position de liaison.

6. Générateur de $^{68}Ge$-$^{68}Ga$ selon la revendication 5, dans lequel le polymère polysaccharide est un dextrane réticulé ou une cellulose réticulée.

7. Générateur de $^{68}Ge$-$^{68}Ga$ selon la revendication 5, dans lequel le polymère polysaccharide est un dextrane réticulé.

8. Générateur de $^{68}Ge$-$^{68}Ga$ selon l'une quelconque des revendications 5 à 7, dans lequel $R^1$ est un groupe méthyle.

9. Procédé de production d'un liquide contenant du $^{68}Ga$, lequel procédé utilise un générateur de $^{68}Ge$-$^{68}Ga$, comprenant :

l'adsorption de $^{68}Ge$ sur un polymère polysaccharide comportant un groupe glucamine représenté par la formule (1) ou par la formule (2) :

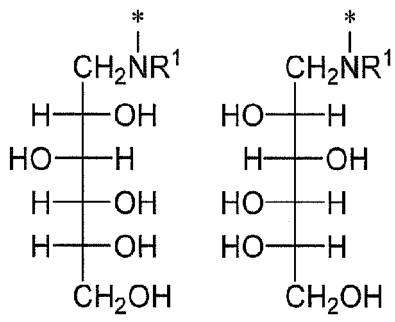

(1) (2)

dans lesquelles $R^1$ est un atome d'hydrogène ou un groupe alkyle, et * est une position de liaison ; et
la circulation d'une solution éluante au travers du polymère polysaccharide afin d'éluer le $^{68}Ga$ généré à partir du $^{68}Ge$ dans la solution éluante.

**10.** Procédé selon la revendication 9, dans lequel le polymère polysaccharide est un dextrane réticulé ou une cellulose réticulée.

**11.** Procédé selon la revendication 9, dans lequel le polymère polysaccharide est un dextrane réticulé.

**12.** Procédé selon l'une quelconque des revendications 9 à 11, dans lequel $R^1$ est un groupe méthyle.

**13.** Procédé selon l'une quelconque des revendications 9 à 12, dans lequel la solution éluante est une solution de sel d'acide faible aqueuse.

Fig. 1

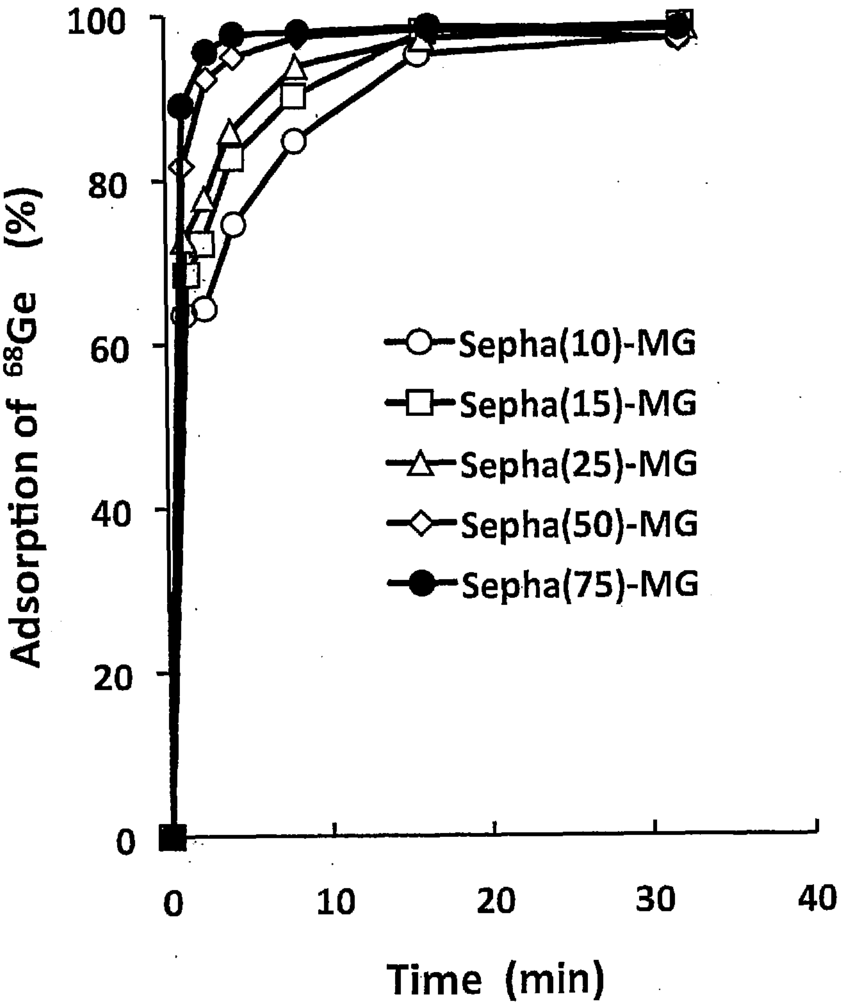
Adsorption of $^{68}$Ge (%)
100
80
60
40
20
0
0
10
20
30
40
Time (min)
Sepha(10)-MG
Sepha(15)-MG
Sepha(25)-MG
Sepha(50)-MG
Sepha(75)-MG

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008108311 A
- JP 2001113179 A
- US 6160110 A
- JP 2011232213 A


### Non-patent literature cited in the description


- **K. V. MALYSHEV ; V. V. SMIRNOV.** A GENERATOR OF GALLIUM-68 BASED ON ZIRCONIUM HYDROXIDE. *Radiokhimiya,* 1975, vol. 17 (1), 137-140
- **SHIZUKO AMBE.** Ge-68Ga Generator with Alpha-Ferric Oxide Support. *Appl Radiat. Isot.,* 1988, vol. 39 (1), 49-51
- **D. R. PHILLIPS et al.** APPLICATION OF SEPHADEX TO RADIOCHEMICAL SEPARATIONS. *Journal of Radioanalytical and Nuclear Chemistry, Articles,* 1995, vol. 195 (2), 251-261